# EUROPEAN PATENT APPLICATION

(11) **EP 4 723 542 A1**
(43) Date of publication of application: **08.04.2026**
(21) Application number: 24204842.9
(22) Date of filing: 04.10.2024
(51) Int. Cl.: H04L 9/08, H04L 9/16, H04L 9/32

(54) **SECURE AND AUTHENTICATED LIGHTWEIGHT KEY RENEGOTIATION METHOD BASED ON DIFFIE-HELLMAN PROTOCOL**

(71) Applicant: Valeo Comfort and Driving Assistance, 94000 Créteil (FR)
(72) Inventor: RASOAMANANA, Aina, 94000 Créteil (FR); PITCHAIMANI, Ramakrishnan, 94000 Créteil (FR)
(74) Representative: Delaval, Guillaume Laurent

(57) **Abstract**

The disclosure notably relates to a computer-implemented method of key renegotiation with mutual authentication between a first device and a second device. The method comprises performing a Diffie-Hellman protocol, wherein each device sends a respective signed dynamic message to the other device which receives the signed dynamic message and performs public-key-based authentication. The method forms an improved solution for key renegotiation.

## Description

### TECHNICAL FIELD

The disclosure relates to the field of computer programs and systems, and more specifically to a computer-implemented method for key renegotiation with mutual authentication between two devices based on the Diffie-Hellman protocol.

### BACKGROUND

Key renegotiation is a fundamental mechanism to ensure secure exchange of information between two or more devices. A key renegotiation is the beginning of a new negotiation inside of an existing session between two devices. The traditional example of a key renegotiation mechanism is provided by the well-known Diffie-Hellman algorithm. Such algorithm allows two devices to derive a common secret over a potentially insecure network. The common secret may be later used to encrypt further communication between the two devices. The original implementation of the Diffie-Hellman algorithm relies on modular arithmetic. The two devices agree to use the generators of a group (e.g., *Z*/*pZ*, where p is a prime number)before starting any communication. Each device chooses a secret number, computes the modular exponentiation of a same generator to the power of the respective secret number and sends the results to the other device. Next, each device exponentiates the result received by the other device to the power of its secret number. The result of this second exponentiation is the same for both devices because of the commutative property of the modular exponentiation. Therefore, the two devices share a common secret which can be used to secure further communication in a new communication session.

There are security protocols which implement variants of the Diffie-Hellman key renegotiation mechanism in order to securely exchange data between two or more components of a system. For each of these components, key renegotiation mechanism involves the transmission of several messages, therefore affecting the performances of the system and introducing unwanted latency phases during the key renegotiation. Furthermore, data cannot be exchanged until the key renegotiation mechanism has been completed between two or more components. Therefore, the key renegotiation mechanism is an impediment for the exchange of critical and timesensitive data. Additionally, if a key is renegotiated without mutual authentication, exchanged data is not secure because potentially exposed to the Man-in-The-Middle (MiTM) attacks. This type of attacks remains possible until the current session of key renegotiation is corrupted. The only solution to avoid the MiTM attacks is to implement a key renegotiation mechanism with mutual authentication, meaning that the two devices verify each other's identity, instead of only one device verifying the other one.

Some of the current security protocols, such as the Transport Layer Security - TLS 1.2, TLS 1.3, DTLS as well as the Security Shell - SSH v2, involve key renegotiation, optionally with mutual authentication. The number of exchanged messages to obtain a key renegotiation is twelve for TLS 1.2, seven for TLS 1.3, and six for SSH v2. However, some of these messages exchanged during the key renegotiation mechanism are not useful because they are already exchanged at earlier moments, such as the exchange of certificates among the devices and/or the exchange of algorithms governing the generation and verification of authentications as well as the exchange of algorithm generating new session keys from the previous one.

Within this context, there is still a need for an improved lightweight key renegotiation mechanism which guarantees better performance, enhancement of security and mutual authentication between two or more devices.

### SUMMARY

It is therefore provided a computer-implemented method of key renegotiation with mutual authentication between a first device and a second device. The method comprises performing a Diffie-Hellman protocol. In the method, each device sends a respective signed dynamic message to the other device. The other device receives the signed dynamic message and performs public-key-based authentication.

The method may comprise one or more of the following features:
- for each device, each respective signed dynamic message sent by the device is signed using a secret key of the device;
- the first device and second device each have a respective public key initially negotiated, and initial knowledge of an old session key and of a generator;
- by the first device, initiating the key renegotiation by computing a first function of the generator and of a private key of the first device and generating a first signed dynamic message comprising a first signature of a concatenation of the public key of the first device, the old session key, and the computed first function;
- by the first device, sending the computed first function and the generated first signed dynamic message to the second device;
- by the second device, receiving the computed first function and the generated first signed dynamic message, and checking the validity of the first signature;
- if the first signature is valid, by the second device:
   ∘ computing a second function of the generator and of a private key of the second device; and
   ∘ computing a common secret which is function of the private key of the second device and of the computed first function; and
   ∘ generating a second signed dynamic message, comprising a second signature of a concatenation of the public key of the second device, the old session key, the common secret, the computed second function, and the computed first function;
- by the second device, sending the computed second function and the generated second signed dynamic message to the first device;
- by the first device, receiving the computed second function and the generated second signed dynamic message, and checking the validity of the second signature;
- the checking the validity of the second signature includes, by the first device, computing the common secret as a function of the private key of the first device and of the computed second function; and/or
- by the two devices, deriving a new session key upon completion of mutual authentication.

It is further provided a computer program comprising instructions for performing the method.

It is further provided a computer readable storage medium having recorded thereon the computer program.

It is further provided a system comprising a processor coupled to a memory and optionally a graphical user interface, the memory having recorded thereon the computer program.

### BRIEF DESCRIPTION OF THE DRAWINGS

Non-limiting examples will now be described in reference to the accompanying drawings, where:
- FIG. 1 shows a flowchart illustrating the method;
- FIG. 2 shows a schematic illustration of the method;
- FIG. 3 shows a schematic illustration of the prior art;
- FIG. 4 shows a schematic illustration of the security weakness present in the prior art; and
- FIG. 5 shows an example of the system.

### DETAILED DESCRIPTION

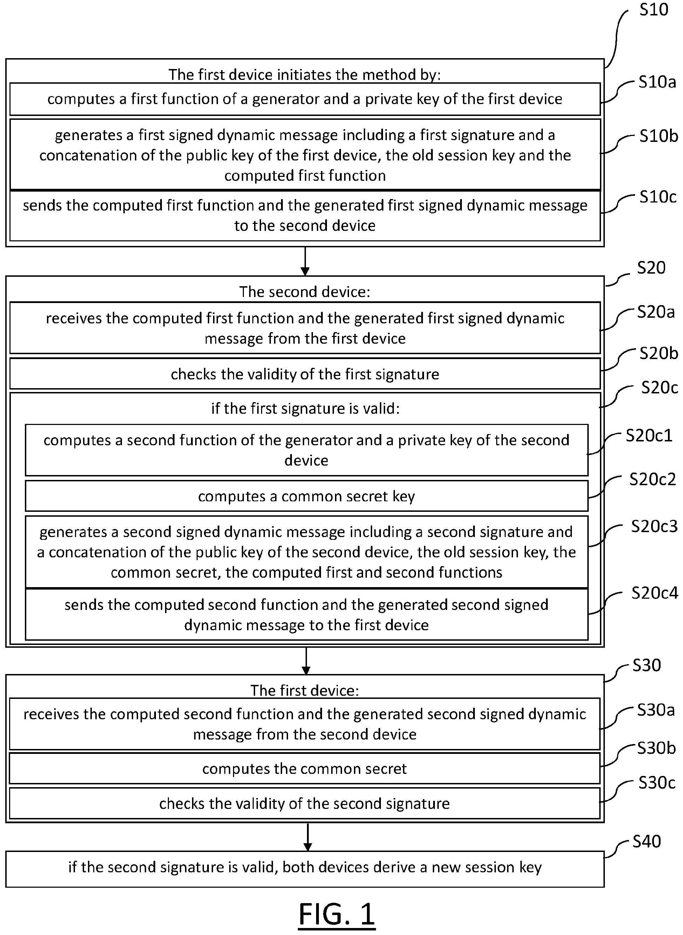

With reference to the flowchart of FIG. 1, it is proposed a computer-implemented method of key renegotiation with mutual authentication between a first device and a second device. The method comprises performing a Diffie-Hellman protocol. In the method, each device sends a respective signed dynamic message to the other device. The other device receives the signed message and performs public-key-based authentication.

This constitutes an improved method of key renegotiation.

Indeed, the method improves the performance of the key renegotiation mechanism by relying on a lightweight version, wherein only two messages are exchanged. The method disclosed herein also improves the security of the key renegotiation mechanism by introducing the mutual authentication during the key renegotiation mechanism itself. This is notably achieved by the method performing the steps illustrated on the flowchart of FIG. 1, and which are further discussed hereinafter.

The method performs key renegotiation between two devices, a first device A and a second device B. The method is based on the well-known Diffie-Hellman key exchange algorithm, wherein each device sends a message to the other device to agree on a common secret through a potentially insecure channel or a public network.

In the method, a session key is already shared between A and B, and both devices aims at refreshing the session key. This already shared session key is referred to as "the old session key". A session key is a key (a key being a piece of information, usually a string of numbers and/or letters) which ensures the security of a communication session between two devices. The session key is used only for one communication session and it has to be renegotiated before starting a new communication session. Furthermore, each device has its own public key and its own secret key. A public key of each device is known to the other device, whereas the secret key of each device is known only to its owner.

In the method, each device sends a respective signed dynamic message to the other device which receives the signed dynamic message and performs public-key-based authentication. A dynamic message is a message of which content changes, e.g., in time (for example regularly, i.e. at regular time intervals, or each time the sender needs to send a new message) or according to the sender. In other words, each device sends its own signed dynamic message, namely the content of the message sent by the first device is different from the content of the message sent by the second device, and for each device the content of the message changes in time as discussed above. In examples, the first signed dynamic message contains the public key of the first device, while the second signed dynamic message contains the public key of the second device. The signed dynamic message is a message carrying a signature of the sending device. The signature of the sending device is a distinctive and unique feature of the sending device which is generated through a dedicated algorithm of signature generation. The identification is unique and secure because the signature of each device is associated with the respective secret key. The signature of the sending device is therefore used by the receiving device to identify the sending device through a dedicated algorithm of signature verification. If the signature verification algorithm validates the signature of the sending device, the receiving device grants authentication and accepts the signed message from the sending device, otherwise it rejects the message and closes the connection. The authentication is a public-key-based-authentication, that is the authentication is based on public key. In other words, each devices grants authentication to each other through the respective signed dynamic messages, wherein each respective message carries the respective device's public key in the content and its respective device's secret key in the signature. Public-key authentication provides cryptographic strength and automated logins without using strong password authentication.

In other words, the method constitutes a secure Diffie-Hellman based key renegotiation mechanism with mutual authentication, where, as previously discussed, key re-exchange is achieved by using only 2 messages.

For each device, each respective signed dynamic message sent by the device may be signed using the secret key of the device. The signature generation algorithm may provide a signature of the given message by using the secret key of the sending device to sign the message. Signatures generated with secret keys enhance the security of the key renegotiation mechanism and prevents any MiTM attacks during key renegotiation.

The first device and second device may each have a respective public key initially negotiated (i.e., the method reuses the shared public key from previous negotiation and renews the exponent), and initial knowledge of an old session key and of a generator (that is a public value shared by the two devices). This means that, prior to the execution of the method, the first and second device may share information that are needed to the initialization of the method. Shared information, besides the two devices' identities, the old session key and the generator, may also comprise additional information, such as algorithms for signature generation and validation, and/or for the new session key generation once mutual authentication is achieved at the end of the method of key renegotiation.

The method may comprise, by the first device, initiating S10 the key renegotiation. The initiation S10 may comprise, by the first device, generating its own private key at S10a, for example denoted by a. The first device may compute a first function of the generator and of the private key of the first device. Following Diffie-Hellman algorithm, in examples the first function may be the modular exponentiation of the generator g raised to the power of its own private key modulo the prime number, i.e., *f*₁(*g, a*) *= g^{a} mod p.* However, this is only an example of the implementation of the method and Diffie-Hellman can be used in any group not only a field (e.g., *Z*/*pZ*, where p is a prime number). The method may further comprise, by the first device, generating SlOb a first signed dynamic message comprising a first signature of a concatenation of the public key of the first device PK_{A}, the old session key, and the computed first function *f*₁(*g, a*)*.* The concatenation is an operation where the elements of the message are linked together one after the other. The concatenation of the public key of the first device, the old session key, and the computed first function may be represented by the shorthand notation *"f₁(g, a*) ∥ old session key∥PK_{A}". The first device A may sign the concatenated dynamic message by means of a signature generation algorithm, which may take the concatenated dynamic message and the secret key SK_{A} of the first device and may generate a first signed dynamic message. The method may further comprise, by the first device A, sending S10c the computed first function and the generated first signed dynamic message to the second device B.

The method may further comprise, by the second device at step S20, receiving S20a the computed first function and the generated first signed dynamic message, and checking the validity of the first signature. Checking S20b the validity of the first signature by device B may be performed through a comparison of its own secret key SK_{B} with the secret key SK_{A} of the first device A. This comparison may be done by means of the signature verification algorithm, previously shared with the first device A.

The method may further comprise, if the first signature is valid, by the second device, at step S20c:
o computing S20c1 a second function of the generator and of a private key of the second device;
o computing S20c2 a common secret which is function of the private key of the second device and of the computed first function;
o generating S20c3 a second signed dynamic message, comprising a second signature of a concatenation of the public key of the second device, the old session key, the common secret, the computed second function, and the computed first function.

The above steps may be implemented as follows. First, if the first signature is not valid, device B may ignore the message received from device A and may close the connection (if a stateful connection such as TCP is used). Instead, if the first signature is valid, device B may authenticate device A. Then, at S20c1, device B may generate its own private key denoted by b and may compute a second function of the generator and of its own private key. The second function may be the modular exponentiation of the generator raised to the power of its own private key modulo the prime number, i.e., *f*₂(*g, b) = g^{b} mod p.* Next at S20c2, the device B may compute a common secret. The common secret is a key which is not shared between the two devices, but it is known by the two devices nor shared at earlier times. Following the Diffie-Hellman algorithm, the common secret may be the modular exponentiation of the first function received from the device A raised to the power of its own private key. In formulae, the common secret is *K = f*₁(*g, a*)*^{b} mod p =* (*g^{a}*)*^{b} mod p.* Consequently at S20c3, the device B may concatenate its own public key PK_{B}, the old session key, the common secret *K*, the computed second function *f*₂(*g, b*) and the computed first function *f*₁(*g, a*), thus obtaining the concatenation *f*₁(*g, a*) ∥ *f*₂(*g, b*) ∥ K∥ old session key∥PK_{B}. Device B may sign the concatenated dynamic message with its own secret key SK_{B} and may generate a second signed dynamic message.

The method may additionally comprise, at S20c4, by the second device B, sending the computed second function *f*₂(*g, b*) and the generated second signed dynamic message to the first device A.

The method may further comprise, by the first device, at S30, receiving S30a the computed second function and the generated second signed dynamic message, and checking S30b the validity of the second signature.

In the method, checking S30c the validity of the second signature may include, by the first device, computing S30b the common secret as a function of the private key of the first device and of the computed second function. Thus at S30b, device A may compute the common secret *K* by taking the computed second function received from device B and raising it to the power of its own private key, i.e., *f*₂(*g, b*)*^{a} mod p =* (*g^{b}*)*^{a} mod p* which is equal to the common secret computed by device B *(g^{a})^{b} mod p.* Afterwards S30c, device A may check the validity of the second signature. The method may therefore involve the following steps. If the second signature is not valid, device A may ignore the message received from device B and may close the connection. However, if the second signature is valid, device A may authenticate device B. Here is the step where the mutual authentication is achieved during the key renegotiation mechanism. In other words, either device authenticate each other by means of the respective signatures assigned to the sent messages, rather than by other means, such as sharing the value of hash functions. As explained earlier, secure mutual and public-key-based authentication is achieved with only two dynamic messages during the lightweight key renegotiation phase, thus improving the performance and strengthening the security of the method.

The method may further comprise, by the two devices, deriving S40 a new session key upon completion of mutual authentication. This final step S40 may be performed to derive a new session key by means of some well-known key derivation function (e.g., a hash function, HKDF and PBKDF2), previously agreed by both devices before initiating the key renegotiation mechanism.

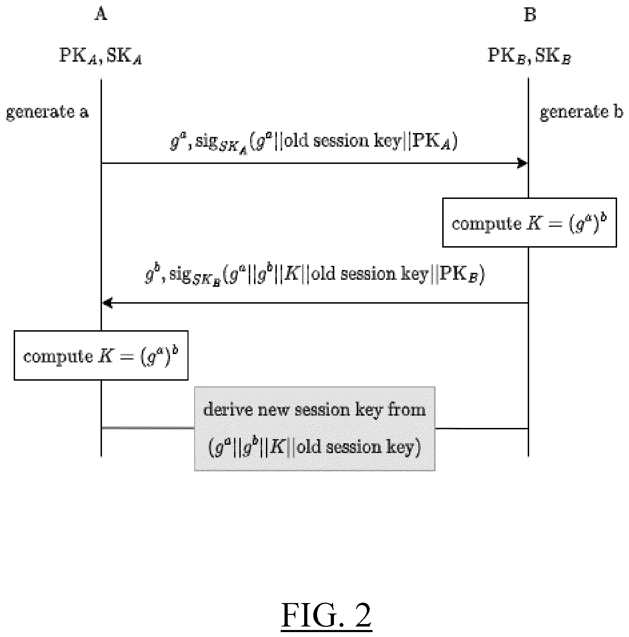

FIG. 2 illustrates graphically the method disclosed in the application. The method achieves mutual authentication of the two devices with only two messages, in contrast to other security protocols, such as TLS 1.2 and HSS v2, that require twelve and six messages, respectively. The efficiency of this class of security protocols as well as the time to complete the protocol relies on the number of messages exchanged. As an example, TLS 1.2 protocol takes about ten-to-twenty seconds to complete the key renegotiation mechanism (for example when implemented in ARTEMIS project). In the present method, instead, device A sends only one message to device B and receives only one message from device B, and vice versa. This feature guarantees a lightweight key renegotiation mechanism which takes only a few seconds to be performed, therefore improving the efficiency of the key renegotiation mechanism and avoiding latency phases during the key renegotiation.

The improved security of the key renegotiation mechanism is achieved by the signature that each device applies to the dynamic message sent to the other device. The signature is used by the receiving device to verify the authenticity of the received message. A valid signature on a received dynamic message gives the recipient confidence that the dynamic message was sent from some known sender. To apply the signature, the sending device may possess a signature generation algorithm, which produces a signature given a dynamic message and the secret key of the sending device. To verify the signature of a certain dynamic message, the receiving device possesses a signature verifying algorithm which, given the message, the public key and the signature of the sending device, either accepts or rejects the message. Different signature generation and verification algorithms may be used, such as the well-known RSA algorithm.

Once the mutual authentication is obtained, based on the description above-mentioned, either device start a new session after deriving a new session key using a previously agreed key derivation algorithm, such as hash function, HKDF and PBKDF2.

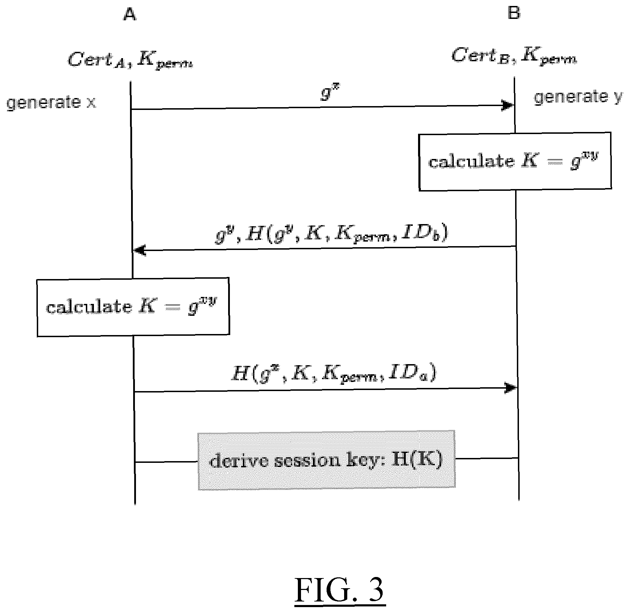

With reference to FIG. 3, it is shown an example from prior art. This example shows a method based on the Diffie-Hellman algorithm wherein the mutual authentication is performed by exchanging values of a hash function computed by each device instead of signatures generated by each device. This example already differs from the disclosed method by at least two features: it requires the exchange of three messages in contrast to two messages of the present method, and the hash function is publicly known thus its value may be computed by anyone who knows its arguments.

The first device A has knowledge of its certificate (which contains its public key, i.e., its identity) and of the certificate of the second device B. Both devices agree on a prime number p, a generator g and a permanent key Kₚₑᵣₘ. The device A generates its own private key denoted by x. Then, following the Diffie-Hellman algorithm, the first function may be the modular exponentiation of the generator raised to the power of its own private key modulo a prime number, i.e., *f*₁(*g, x*) = *g^{x} mod p.* The first device A sends its computed first function to the second device B.

Next, the second device generates its own private key denoted by y and computes its own second function, i.e., *f*₂(*g, y*) *= g^{y} mod p* and the common secret *K = f*₁(*g, x*)*^{y} mod p =* (*g^{x}*)*^{y} mod p.* Next, it computes a first hash value H given its own computed second function, the common secret, the permanent key and its identity. Lastly, the device B sends its computed second function and the first hast value to the device A.

Device A receives the second function *f₂(g, y*) and the first hast value computed by the device B and computes the common secret *K = f*₂(*g, y*)*^{x} mod p =* (*g^{y}*)*^{x} mod p.* Next, device A verifies the validity of the first hash value received from device B and computes a second value of the hash function given its own computed first function, the common secret, the permanent key and its identity. Then, device A sends the second value of the hash function to device B.

Device B receives the second value of the hash function computed by the device A and verifies its validity. If validation passes, both devices derive a new session key by computing the value of the hash function corresponding to the common secret K.

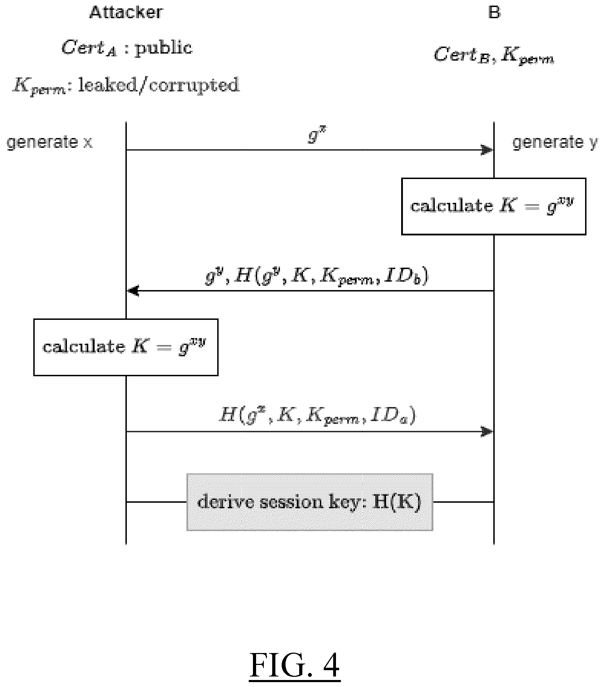

The above example of the prior art, wherein the mutual authentication is performed using a hash function, has a security drawback thus making this prior art method endangered in case of a MiTM attack. As shown in FIG. 4, let us assume that the permanent key Kₚₑᵣₘ is corrupted and/or leaked, i.e., another device knows its value. Because the hash function is publicly known, any third device may compute its value as soon as it known all its arguments. Therefore, a third malicious device may act as an attacker and imitate the device A, eventually reaching mutual authentication and derive a new session key with device B. In fact, the attacker generates a private key x and a first function, say *f*₁(*g, x).* Then, following the description detailed earlier, the malicious device may be able to compute the second value of the hash function to send to device B to get mutual authentication. This is the case because the second value of the hash function does depend on the attacker's first function *f*₁(*g, x*)*,* the common secret K computed by the attacker from the second function received from device B by raising it to the power of x, i.e. *f*₂(*g, y*)*^{x},* the corrupted and/or leaked permanent key Kₚₑᵣₘ, and the attacker's identity.

In contrast, the disclosed method is secure against MiTM attacks even in the unfortunate event that the old session key is corrupted and/or leaked. Indeed, a potential malicious device will not be able to obtain the mutual authentication with the second device B. The first signature validation (step S20b with reference to FIG. 1) will fail simply because the signature verification algorithm of device B (which was previously agreed with the true device A) will not grant the authentication and, consequently, device B will ignore the message received from the malicious device and close the connection.

The disclosed method is particularly suitable for systems where one or more devices have limited memory and/or calculation capabilities, the exchange of messages should take only a few seconds, and where the need of security from malicious devices, such as MiMT attacks, is paramount for the functioning of the system. A practical example of the present disclosed method may be the telematic communication between two independent controllers (*i.e*. the two devices) in the same PCB (NAD and MCU in a telematic ECU). Another practical example of the disclosed method may comprise device A and device B to be two independent ECU that send and receive messages in a key-vehicle network. The device A may be installed within the vehicle key, while device B may be an in-vehicle device which grants the access to the vehicle upon mutual authentication with device A. An implementation of the disclosed method in this class of systems thus guarantees efficiency and security of the communication between the key and the vehicle.

The method is computer-implemented. This means that steps (or substantially all the steps) of the method are executed by at least one computer, or any system alike. Thus, steps of the method are performed by the computer, possibly fully automatically, or, semi-automatically. In examples, the triggering of at least some of the steps of the method may be performed through user-computer interaction. The level of user-computer interaction required may depend on the level of automatism foreseen and put in balance with the need to implement user's wishes. In examples, this level may be user-defined and/or pre-defined.

A typical example of computer-implementation of a method is to perform the method with a system adapted for this purpose. The system may comprise a processor coupled to a memory and a graphical user interface (GUI), the memory having recorded thereon a computer program comprising instructions for performing the method. The memory may also store a database. The memory is any hardware adapted for such storage, possibly comprising several physical distinct parts (e.g. one for the program, and possibly one for the database).

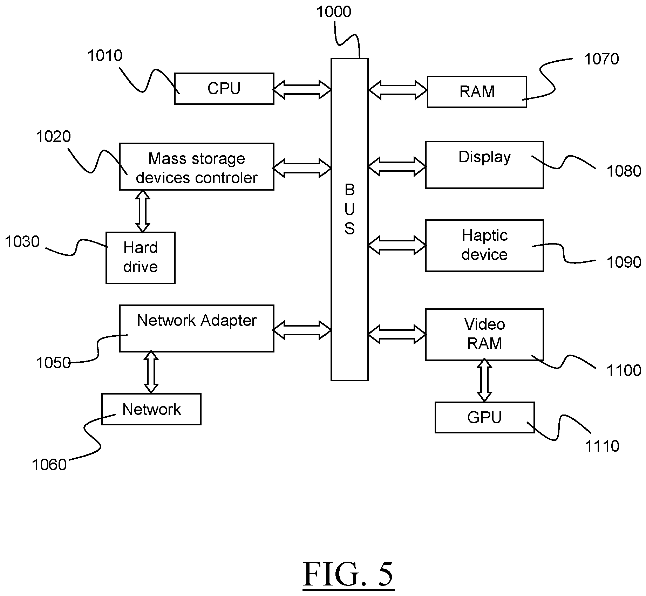

FIG. 5 shows an example of the system, wherein the system is a client computer system, e.g., a workstation of a user.

The client computer of the example comprises a central processing unit (CPU) 1010 connected to an internal communication BUS 1000, a random access memory (RAM) 1070 also connected to the BUS. The client computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks. Any of the foregoing may be supplemented by, or incorporated in, specially designed ASICs (application-specific integrated circuits). A network adapter 1050 manages accesses to a network 1060. The client computer may also include a haptic device 1090 such as cursor control device, a keyboard or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

The computer program may comprise instructions executable by a computer, the instructions comprising means for causing the above system to perform the method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method. The computer program may alternatively be stored and executed on a server of a cloud computing environment, the server being in communication across a network with one or more clients. In such a case a processing unit executes the instructions comprised by the program, thereby causing the method to be performed on the cloud computing environment.

## Claims

1. A computer-implemented method of key renegotiation with mutual authentication between a first device and a second device, the method comprising performing a Diffie-Hellman protocol, wherein each device sends a respective signed dynamic message to the other device which receives the signed dynamic message and performs public-key-based authentication.

2. The method of claim 1, wherein, for each device, each respective signed dynamic message sent by the device is signed using a secret key of the device.

3. The method of claim 1 or 2, wherein the first device and second device each have a respective public key initially negotiated, and initial knowledge of an old session key and of a generator.

4. The method of claim 3, wherein the method comprises:
• by the first device, initiating (S10) the key renegotiation by computing (S10a) a first function of the generator and of a private key of the first device and generating (SlOb) a first signed dynamic message comprising a first signature of a concatenation of the public key of the first device, the old session key, and the computed first function.

5. The method of claim 4, wherein the method further comprises:
• by the first device, sending (S10c) the computed first function and the generated first signed dynamic message to the second device.

6. The method of claim 5, wherein the method further comprises
• by the second device, receiving (S20a) the computed first function and the first generated signed dynamic message, and checking (S20b) the validity of the first signature.

7. The method of claim 6, wherein the method further comprises:
• If the first signature is valid, by the second device:
∘ computing (S20c1) a second function of the generator and of a private key of the second device;
∘ computing (S20c2) a common secret which is function of the private key of the second device and of the computed first function;
∘ generating (S20c3) a second signed dynamic message, comprising a second signature of a concatenation of the public key of the second device, the old session key, the common secret, the computed second function, and the computed first function.

8. The method of claim 7, wherein the method further comprises:
• by the second device, sending (S20c4) the computed second function and the generated second signed dynamic message to the first device.

9. The method of claim 8, wherein the method further comprises:
• by the first device, receiving (S30a) the computed second function and the generated second signed dynamic message, and checking (S30c) the validity of the second signature.

10. The method of claim 9, wherein checking the validity of the second signature includes, by the first device, computing (S30b) the common secret as a function of the private key of the first device and of the computed second function.

11. The method of any of claims 1 to 10, wherein the method further comprises, by the two devices, deriving (S40) a new session key upon completion of mutual authentication.

12. A computer program comprising instructions for performing the method of any of claims 1 to 11.

13. A computer readable storage medium having recorded thereon a computer program of claim 12.

14. A system comprising a processor coupled to a memory, the memory having recorded thereon the computer program of claim 12.
